# EUROPÄISCHE PATENTANMELDUNG

(11) **EP 4 129 588 A1**
(43) Veröffentlichungstag der Anmeldung: **08.02.2023**
(21) Anmeldenummer: 22187018.1
(22) Anmeldetag: 26.07.2022
(51) Int. Cl.: B25J 17/02

(54) **VORRICHTUNG UND VERFAHREN ZUM GREIFEN UND ÜBERGEBEN VON WERKSTÜCKEN**

(30) Priorität: 26.07.2021 DE 102021119320
(71) Anmelder: Robot Automation GmbH, 19061 Schwerin (DE)
(72) Erfinder:
(74) Vertreter: Kleine, Hubertus

(57) **Zusammenfassung**

Eine Vorrichtung (1) zum Greifen und Übergeben von Werkstücken umfasst eine linear zwischen einer ersten und einer zweiten Endposition bewegbare Hubvorrichtung (5) und einen durch die Hubvorrichtung (5) bewegbaren Halter (2) für ein Werkstück, wobei der Halter (2) in der ersten Endposition zum Aufnehmen des Werkstückes angeordnet ist und der Halter (2) in der zweiten Endposition zum Abgeben des Werkstückes angeordnet ist, wobei der Halter (2) durch die Hubvorrichtung (5) um mindestens zwei senkrecht zueinander stehende Achsen drehbar ist. Ferner betrifft die Erfindung ein Verfahren zum Greifen und Übergeben von Werkstücken.

## Beschreibung

Die vorliegende Erfindung betrifft eine Vorrichtung zum Greifen und Übergeben von Werkstücken mit einer linear zwischen einer ersten und einer zweiten Endposition bewegbaren Hubvorrichtung und einem durch die Hubvorrichtung bewegbaren Halter für ein Werkstück, wobei der Halter in der ersten Endposition zum Aufnehmen des Werkstückes angeordnet ist und der Halter in der zweiten Endposition zum Abgeben des Werkstückes angeordnet ist, und ein Verfahren zum Greifen und Übergeben von Werkstücken.

Im Rahmen der Serienfertigung müssen Werkstücke häufig bewegt und in einer bestimmten Position angeordnet werden. Beispielsweise müssen Werkstücke, wie Buchsen, aus einem Magazin oder einer Zuführung entnommen und dann beispielsweise in ein Spritzgusswerkzeug eingelegt werden, wobei die Positionierung des Werkstückes exakt in einer Hohlkammer des Spritzgusswerkzeuges erfolgen muss. Zum Bewegen des Werkstückes kann jeweils ein Antrieb vorgesehen werden, um das Werkstück linear in eine erste Richtung zu bewegen, und ein weiterer Antrieb, um das Werkstück zu drehen oder in eine zweite Richtung zu bewegen. Dies erfordert eine Vielzahl von Antrieben beim Handling des Werkstückes, was aufwändig und fehleranfällig ist.

Es ist daher Aufgabe der vorliegenden Erfindung, eine Vorrichtung zum Greifen und Übergeben von Werkstücken zu schaffen, die einfach aufgebaut ist und eine effektive Handhabung beim Greifen und Übergeben der Werkstücke ermöglicht.

Diese Aufgabe wird mit einer Vorrichtung mit den Merkmalen des Anspruches 1 und einem Verfahren mit den Merkmalen des Anspruches 9 gelöst.

Bei der erfindungsgemäßen Vorrichtung ist eine linear bewegbare Hubvorrichtung zwischen einer ersten und einer zweiten Endposition bewegbar, um einen Halter für ein Werkstück von einer ersten Endposition, in der ein Werkstück aufgenommen wird, in eine zweite Endposition zu bewegen, in der das Werkstück abgegeben wird, und wieder zurück von der zweiten in die erste Endposition. Dabei ist der Halter durch die linear bewegbare Hubvorrichtung um mindestens zwei senkrecht zueinander stehende Achsen drehbar. Dies ermöglicht eine flexible Ausrichtung des Halters zwischen den beiden Endpositionen, so dass ein Werkstück von einer vorbestimmten Position aufgenommen und in einer zweiten Endposition abgegeben werden kann, wobei der Halter zwischen diesen beiden Endpositionen um zwei senkrecht zueinander stehende Achsen gedreht ist. Dadurch kann mit einem einzigen Antrieb der Hubvorrichtung eine Ausrichtung des Werkstückes gleichzeitig um mindestens zwei Achsen erfolgen. Es muss somit keine Aufteilung der Bewegung des Werkstückes in unterschiedliche Richtungen mit einem Antrieb pro Bewegungsrichtung erfolgen.

Vorzugsweise ist der Halter an einem ersten Drehlager verschwenkbar gehalten, wobei das erste Drehlager bevorzugt als Kalottenlager ausgebildet ist, so dass der Halter relativ zu dem Drehlager um mehrere Achsen verschwenkbar ist. Der Halter für das Werkstück kann dabei über einen Hebel mit dem Drehlager verbunden sein.

Der Halter ist vorzugsweise mit einem Stößel der Hubvorrichtung verbunden, wobei der Stößel endseitig über ein Kalottenlager mit dem Halter gekoppelt ist. Dabei kann am Ende des Stößels ein Kugelkopf und in dem Halter ein Kalottenlager vorgesehen sein, so dass der Halter relativ zu dem Stößel um mehrere Achsen verschwenkbar ist. Alternativ kann auch an dem Stößel ein Kalottenlager und an dem Halter ein Kugelkopf vorgesehen sein.

Zur Bewegung des Halters ist vorzugsweise ein Mitnehmer vorgesehen, um den Halter in eine Bewegungsrichtung mit dem Stößel zu koppeln, wobei der Stößel in die gegenüberliegende Bewegungsrichtung gegen den Halter, insbesondere das Kalottenlager, drückt. Dadurch kann in beide Bewegungsrichtungen eine Zwangsbewegung des Halters gewährleistet werden, einmal eine Bewegung des Halters durch den Stößel in eine erste Richtung und dann durch die Kopplung zwischen Halter und Mitnehmer bei einer Bewegung des Stößels in die gegenüberliegende zweite Richtung.

Der Bewegungsbereich der Hubvorrichtung kann durch zwei Endanschläge für den Halter begrenzt werden, damit der Halter in der ersten Endposition und der zweiten Endposition über jeweils einen Endanschlag ausgerichtet ist.

Für eine schnelle Bewegung des Halters kann die Hubvorrichtung über einen pneumatischen Antrieb bewegbar sein. Auch andere Antriebe, wie elektrische Antriebe oder hydraulische Antriebe, können eingesetzt werden.

Bei dem erfindungsgemäßen Verfahren zum Greifen und Übergeben von Werkstücken wird zunächst ein Halter für ein Werkstück in einer ersten Endposition angeordnet und nimmt ein Werkstück auf. Dann wird eine lineare Hubvorrichtung von der ersten Endposition in eine zweite Endposition bewegt, wobei der Halter über einen Stößel der Hubvorrichtung um mindestens zwei senkrecht zueinander stehende Achsen verschwenkt wird. Der in der zweiten Endposition angeordnete Halter kann dann das Werkstück wieder abgeben. Anschließend wird der Halter über den Stößel der Hubvorrichtung wieder in die erste Endposition zur Aufnahme eines weiteren Werkstückes bewegt. Dadurch kann ein effektives Aufnehmen und Ausrichten des Werkstückes in einem Produktionsprozess erfolgen.

Vorzugsweise wird bei der linearen Bewegung des Stößels der Hubvorrichtung der Halter um zwei Kalottenlager gedreht, so dass eine exakte mechanische Ausrichtung des Halters durch die zwei Kalottenlager in den Endpositionen gewährleistet ist.

Die Erfindung wird nachfolgend anhand eines Ausführungsbeispiels mit Bezug auf die beigefügten Zeichnungen näher erläutert. Es zeigen:
- Figuren 1A und 1 B: zwei Ansichten einer Vorrichtung zum Greifen und Übergeben von Werkstücken in einer ersten Endposition;
- Figuren 2A und 2B: zwei Ansichten der Vorrichtung der Figur 1 im Schnitt, und
- Figur 3: eine geschnittene Ansicht der Vorrichtung der Figur 1 in der zweiten Endposition.

Eine Vorrichtung 1 zum Greifen und Übergeben von Werkstücken umfasst einen Halter 2, der eine Oberfläche 20 aufweist, an der eine Greif- oder Haltevorrichtung zum Aufnehmen eines oder mehrerer Werkstücke montierbar ist. Eine solche Greif- oder Haltevorrichtung kann beispielsweise mindestens einen Stift aufweisen, der in ein Werkstück zur Aufnahme eingefügt werden, oder einen Greifer, der von außen auf das Werkstück zugreift. Solche Handhabungsvorrichtungen werden an der Oberfläche 20 montiert und können je nach Größe und Form des Werkstückes ausgewählt werden.

Der Halter 2 ist über einen Hebel 3 an einem ersten Drehlager 4 verschwenkbar gelagert. Das Drehlager 4 ist als Kalottenlager ausgebildet und an einem Lagerhalter 8 an einem Gestell 7 fixiert. An dem Gestell 7 ist eine Hubvorrichtung 5 mit einem linear bewegbaren Stößel 6 vorgesehen, der zwischen zwei Endpositionen bewegbar ist. Der Stößel 6 der Hubvorrichtung 5 ist dabei über einen pneumatischen Antrieb, einen elektrischen Antrieb, einen hydraulischen Antrieb oder einen anderen Antrieb angetrieben.

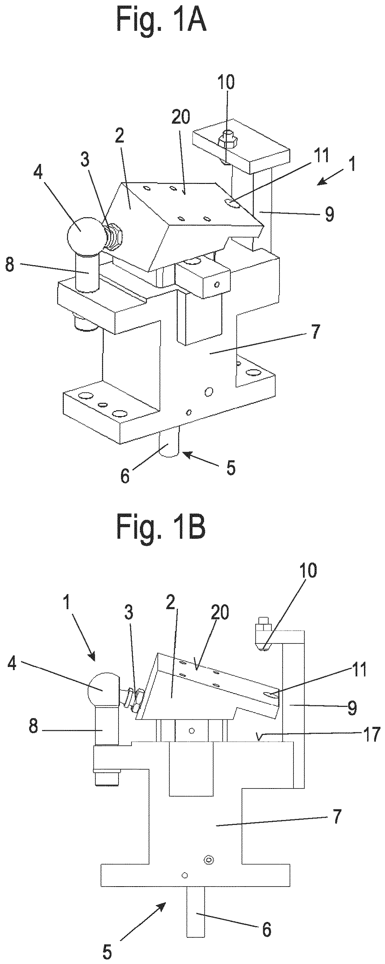

An dem Gestell 7 ist auf der zu dem Drehlager 4 abgewandten Seite ein Ausleger 9 mit einem Anschlag 10 fixiert. Wie in Figur 1B erkennbar ist, besitzt der Halter 2 an einer Oberfläche 20 eine Aufnahme 11, in die der hervorstehende Anschlag 10 an dem Ausleger 9 einfügbar ist, um den Halter 2 zu zentrieren und in einer zweiten Endposition auszurichten. In dem Figuren 1A und 1B ist der Halter 2 in einer ersten Endposition angeordnet, in der der Halter 2 mit einer Unterseite an einer Oberfläche 17 des Gestells 7 abgestützt ist. Durch die Oberfläche 17 oder ein an dem Gestell 7 montiertes Bauteil kann ein Endanschlag zur Vorgabe der Ausrichtung in der ersten Endposition des Halters 2 angeordnet sein.

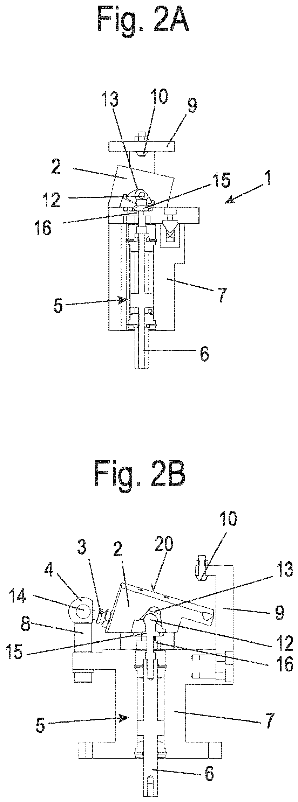

In den Figuren 2A und 2B ist die Vorrichtung 1 im Schnitt gezeigt, und es ist erkennbar, dass der Stößel 6 der linearen Hubvorrichtung 5 durch das Gestell 7 durchgeführt ist. Der Stößel 6 weist am Ende einen Kugelkopf 12 auf, der in ein Kalottenlager 13 eingreift, das in dem Halter 2 ausgebildet ist. Bei einer Bewegung des Stößels 6 nach oben in den Figuren 2A und 2B drückt der Kugelkopf 12 gegen das Kalottenlager 13 und kann somit den Halter 2 nach oben bewegen, der zusätzlich um das Drehlager 4 zusammen mit dem Hebel 3 verschwenkt.

Um die Hubvorrichtung auch bei einer gegenläufigen Bewegung mit dem Halter 2 zu koppeln, ist an dem Halter 2 ein Mitnehmer 15 in Form eines hervorstehenden Ringes vorgesehen, der gegen einen Ring 16 an einer Durchführung für den Stößel 6 in dem Halter 2 anschlägt. Dadurch ist der Halter 2 in beide Bewegungsrichtungen des Stößels 6 mit diesem gekoppelt. Der Halter 2 ist dabei zweiteilig ausgebildet und umfasst ein Oberteil und ein Unterteil, die aneinander fixiert sind, um in einem Innenraum des Halters 2 den Kugelkopf 12 und den Mitnehmer 15 aufzunehmen.

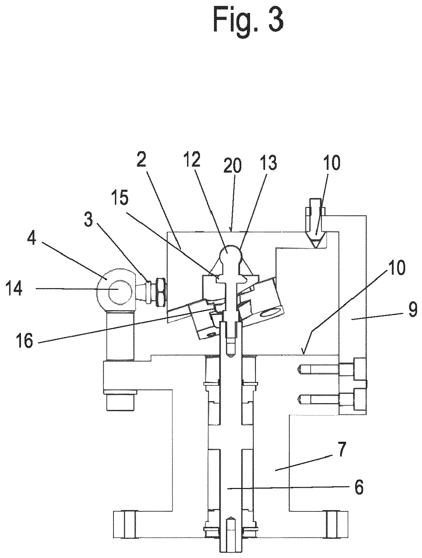

In Figur 3 ist der Halter 2 in der zweiten Endposition angeordnet. Der Stößel 6 wurde aus der ersten Endposition gemäß den Figuren 1 und 2 relativ zu dem Gestell 7 bewegt, wobei der Kugelkopf 12 gegen das Kalottenlager 13 in dem Halter 2 drückt und dadurch den Halter 2 um den Hebel 3 und das Drehlager 4 verschwenkt, bis der Halter 2 an dem Anschlag 10 anliegt, der in die Aufnahme 11 an der Oberfläche 20 des Halters 2 eingreift. Die Oberfläche 20 ist in der zweiten Endposition in Figur 3 horizontal ausgerichtet, während die Oberfläche 20 in der unteren ersten Endposition geneigt ausgerichtet ist, wobei bei der Bewegung von der ersten Endposition in die zweite Endposition der Halter 2 um zwei rechtwinklig zueinander stehende Achsen gedreht wurde. Diese Drehung um zwei Achsen mit einer einzigen Hubbewegung ermöglicht eine flexible Ausrichtung des Werkstückes, das in der zweiten Endposition übergeben werden kann.

Soweit in der vorstehenden Beschreibung die Begriffe "oben" oder "unten" verwendet wurden, dient dies nur zur Erläuterung der Bewegungsrichtung in den Figuren. Die Vorrichtung kann beliebig im Raum angeordnet werden, um Werkstücke an einer ersten Endposition aufzunehmen und an der zweiten Endposition wieder abzugeben.

### Bezugszeichenliste

- 1: Vorrichtung
- 2: Halter
- 3: Hebel
- 4: Drehlager
- 5: Hubvorrichtung
- 6: Stößel
- 7: Gestell
- 8: Lagerhalter
- 9: Ausleger
- 10: Anschlag
- 11: Aufnahme
- 12: Kugelkopf
- 13: Kalottenlager
- 15: Mitnehmer
- 16: Ring
- 17: Oberfläche
- 20: Oberfläche

## Patentansprüche

1. Vorrichtung (1) zum Greifen und Übergeben von Werkstücken mit einer linear zwischen einer ersten und einer zweiten Endposition bewegbaren Hubvorrichtung (5) und einem durch die Hubvorrichtung (5) bewegbaren Halter (2) für ein Werkstück, wobei der Halter (2) in der ersten Endposition zum Aufnehmen des Werkstückes angeordnet ist und der Halter (2) in der zweiten Endposition zum Abgeben des Werkstückes angeordnet ist, **dadurch gekennzeichnet, dass** der Halter (2) durch die Hubvorrichtung (5) um mindestens zwei senkrecht zueinander stehende Achsen drehbar ist.

2. Vorrichtung nach Anspruch 1, **dadurch gekennzeichnet, dass** der Halter (2) an einem ersten Drehlager (4) verschwenkbar gelagert ist.

3. Vorrichtung nach Anspruch 2, **dadurch gekennzeichnet, dass** das erste Drehlager (4) als Kalottenlager ausgebildet ist.

4. Vorrichtung nach einem der vorhergehenden Ansprüche, **dadurch gekennzeichnet, dass** der Halter (2) mit einem Stößel (6) der Hubvorrichtung (5) verbunden ist.

5. Vorrichtung nach Anspruch 4, **dadurch gekennzeichnet, dass** der Stößel (6) über ein Kalottenlager (13) mit dem Halter (2) gekoppelt ist.

6. Vorrichtung nach Anspruch 4 oder 5, **dadurch gekennzeichnet, dass** an dem Stößel (6) ein Mitnehmer (15) vorgesehen ist, um den Halter (2) in eine Bewegungsrichtung mit dem Stößel (6) zu koppeln und der Stößel (6) in die gegenüberliegende Bewegungsrichtung gegen den Halter (2), insbesondere das Kalottenlager (13), drückt.

7. Vorrichtung nach einem der vorhergehenden Ansprüche, **dadurch gekennzeichnet, dass** die Hubvorrichtung (5) zwei Endanschläge (10, 17) für den Halter (2) aufweist, um diesen in der ersten Endposition und der zweiten Endposition auszurichten.

8. Vorrichtung nach einem der vorhergehenden Ansprüche, **dadurch gekennzeichnet, dass** die Hubvorrichtung (5) einen pneumatischen Antrieb aufweist.

9. Verfahren zum Greifen und Übergeben von Werkstücken mit den folgenden Schritten:
- Anordnen eines Halters (2) in einer ersten Endposition und Aufnehmen eines Werkstückes durch den Halter (2);
- Bewegen einer linearen Hubvorrichtung (5) von der ersten Endposition in eine zweite Endposition, wobei der Halter (2) über einen Stößel (6) der Hubvorrichtung (5) um mindestens zwei senkrecht zueinander stehende Achsen verschwenkt wird, und
- Abgabe des Werkstückes in der zweiten Endposition.

10. Verfahren nach Anspruch 9, **dadurch gekennzeichnet, dass** bei der linearen Bewegung des Stößels (6) der Hubvorrichtung (5) der Halter (2) um zwei Kalottenlager (4, 13) gedreht wird.
